# FASCICULE DE BREVET EUROPEEN

(11) **EP 2 935 341 B1**
(45) Date de publication et mention de la délivrance du brevet: **19.04.2017**
(21) Numéro de dépôt: 13805932.4
(22) Date de dépôt: 17.12.2013
(51) Int. Cl.: C08C 19/20, C08F 8/34, C08F 2/38, C08F 279/02

(54) **PROCEDE DE GREFFAGE RADICALAIRE D'UN ELASTOMERE DIENIQUE**
VERFAHREN ZUR RADIKALISCHEN PFROPFUNG EINES DIENELASTOMERS
PROCESS FOR RADICAL GRAFTING OF A DIENE ELASTOMER

(30) Priorité: 20.12.2012 FR 1262470
(43) Date de publication de la demande: 28.10.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MATMOUR, Rachid, 63040 Clermont-Ferrand Cedex 9 (FR); NGO, Robert, 63040 Clermont-Ferrand Cedex 9 (FR); SEEBOTH, Nicolas, 63040 Clermont-Ferrand Cedex 9 (FR)
(74) Mandataire: Gandon-Pain, Sylvie
(86) Numéro de dépôt international: PCT/EP2013/076979
(87) Numéro de publication internationale: WO 2014/095925

(56) Documents cités:
- FR-A1- 2 919 294
- FR-A1- 2 962 440
- AMEDURI BRUNO ET AL: "Synthesis and properties of fluorinated telechelic macromolecular diols prepared by radical grafting of fluorinated thiols onto hydroxyl-terminated polybutadienes", JOURNAL OF POLYMER SCIENCE PART A: POLYMER CHEMISTRY, JOHN WILEY & SONS, INC, US; ENGINEERING INFORMATION, INC., NEW YORK, NY, US , vol. 31, no. 8 1 juillet 1993 (1993-07-01), pages 2069-2080, XP002712178, ISSN: 0887-624X, DOI: 10.1002/POLA.1993.080310813 Extrait de l'Internet: URL:http://onlinelibrary.wiley.com/doi/10. 1002/pola.1993.080310813/pdf [extrait le 2003-03-10] cité dans la demande

## Description

La présente invention concerne un procédé de préparation de l'élastomère diénique fonctionnel le long de la chaîne consistant en une réaction de greffage radicalaire de groupements fonctionnels sur les insaturations du polymère diénique en présence d'un amorceur radicalaire.

Afin de modifier les propriétés des élastomères synthétiques contenus dans les compositions de caoutchouc pour pneumatiques, différentes stratégies sont possibles. Parmi celles-ci, l'introduction de nouvelles fonctions chimiques en bout ou le long de la chaîne polymère est une des méthodes employées.

Les Demanderesses s'intéressent plus particulièrement dans le cadre de l'invention à la fonctionnalisation le long de la chaîne polymère diénique. Différents types de réactions sur les insaturations de polymères diéniques permettant la fonctionnalisation sont connus dans la littérature. On peut citer les réactions de cycloaddition [4+2] de type réaction de Diels-Alder entre un diénophile (anhydride maléique, par exemple) et des copolymères diénique possédant des diènes conjugués le long de la chaîne grâce à l'insertion d'un co-monomère triène conjugué (allo-ocimène) au cours de la copolymérisation anionique (EP2423239A1).

Les réactions de cycloaddition 1,3-dipolaire en présence d'oxyde de nitrile ou de nitrone (R. Huisgen, Angew. Chem. Int. Ed. 1963, 2, 565-632 ; R. Huisgen, Angew. Chem. Int. Ed. 1963, 2, 633-645 ; J. J. Tufariello, In 1,3-Dipolar Cycloaddition Chemistry, Padwa, A. Ed., Wiley - Interscience: New York, 1984, Chapter 9, p 83 ; K. B. G. Torssell, Nitrile Oxides, Nitrones, and Nitronates, VCH Publishers Inc.: New York 1988 ; K.V. Gothelf, K.V. Jorgensen, Chem. Rev. 1988, 98, 863-909) sont aussi connues pour la fonctionnalisation (WO2012007441A WO2006045088A2) ou la réticulation de polymère diénique (FR1583406, WO2006081415A2).

Le greffage radicalaire de thiol fonctionnels ou non via les catalyses photochimiques ou chimiques (avec ou sans amorceur radicalaire) fait partie de ces réactions de fonctionnalisation de polymères diéniques (caoutchouc naturel et synthétique) au même titre que les réactions de cycloaddition mentionnées plus haut (Angew. Chem. Int. Ed. 2010, 49, 1540-1573 ; J. Polym. Sci.: Part A: Polym. Chem. 2004, 42, 5301-5338 ; Polym. Chem., 2010, 1, 17-36).

La demande de brevet européen EP1000971A1 déposé par Bayer présente le greffage radicalaire post-polymérisation d'un carboxylmercaptan, tel que l'acide 3-mercaptopropionique, sur un copolymère SBR à base de motifs diène conjugué de motifs vinylaromatique, en présence d'un amorceur radicalaire, tel que le peroxyde de lauroyle. Cette réaction de modification chimique effectuée dans le cyclohexane à 80°C pendant 5 heures amène à un rendement de greffage de 42%.

Dans la continuité de ces travaux, les demandes de brevet WO2009034001A1 et WO2009138349A1 décrivent un procédé de greffage consistant à polymériser par voie anionique du butadiène et à additionner en fin de polymérisation l'acide 3-mercaptopropionique en présence de peroxyde de lauroyle sur les chaînes vivantes de polybutadiène avant neutralisation. Les rendements de greffage obtenus sont d'environ 70% que ce soit pour un SBR à fort taux de vinyle (80%) ou pour un SBR à faible taux de vinyle (22%).

Les demandes WO200930840 et WO200930841 décrivent des polymères greffés obtenus à partir de la réaction entre des copolymères à base de motifs diène conjugué et de motifs hydrocarbure mono-vinylaromatique et des dérivés thiols. La réaction de greffage a lieu dans un réacteur, sous atmosphère inerte d'azote, en présence d'un solvant tel que le toluène, à une température de 90°C, sous agitation, pendant une durée de 3 à 4 heures, en présence d'un polymère, d'un dérivé thiol qui joue le rôle de greffon et d'un amorceur radicalaire tel que l'azobisisobutyronitrile (AIBN). Les rendements de greffage obtenus dans ces conditions de réaction sont de 39%.

Dans la continuité de ces travaux, le brevet FR2962440A1 décrit la réaction de greffage entre le polymère diénique et un dérivé thiol, en particulier un dérivé thiol paraffinique en l'absence de solvant et en l'absence de tout amorceur radicalaire externe. Le rendement de greffage obtenu dans ces conditions est de 71%.

Le groupe du Pr. Boutevin décrit le greffage de thiols fluorés sur des oligomères de polybutadiène hydroxy-téléchélique (PBHT à 20% ou 80% de PB-1,2) au reflux du THF en présence de d'AIBN ou de tert-butylperoxypivalate (J. Polym. Sci., Part A: Polym. Chem. 1993, 31, 2069-2080). Les auteurs ont démontré que malgré la présence d'un large excès de thiol (rapport molaire initial [RSH]/[double liaison total] = 4) le rendement de greffage est limité à 50%, en particulier sur un PBHT à faible taux de PB-1,2. Néanmoins, les auteurs indiquent la possibilité de consommer le thiol résiduel en effectuant un deuxième ajout de peroxyde au bout d'un temps « t ».

Au vu de ce qui précède, il apparaît qu'aucun des procédés de greffage radicalaire décrits ne permet l'obtention d'un rendement de greffage quantitatif (100%). Cet inconvénient impose une purification du polymère (précipitation dans un alcool, élimination sous vide ou par entrainement à la vapeur d'eau), comme indiqué dans les différents exemples des brevets mentionnés plus haut, pour éviter la présence d'espèce libre non greffée. Notamment, l'utilisation de molécule thiol fonctionnel de haut point d'ébullition ou de type oligomères/polymères terminés thiol rendrait difficile la purification du polymère dans le cas d'un rendement non quantitatif.

L'inconvénient du rendement de greffage faible, en particulier dans le cadre d'un procédé de greffage post-polymérisation, a notamment été mis en évidence par les Demanderesses lors de divers essais témoins mettant en oeuvre le greffage de différents thiols fonctionnels sur un PB ou SBR à fort taux de vinyle en solvant apolaire ou polaire. Notamment, il a été confirmé par les Demanderesses que l'ajout d'une deuxième quantité d'amorceur radicalaire en cours de réaction sur une matrice de PB de hauts poids moléculaire (Mn = 100 000 g/mol) à fort taux de vinyle (75%) en présence de thiol fonctionnel ou non ne permet pas l'augmentation du rendement de greffage. Il a été aussi démontré par les Demanderesses que le greffage radicalaire en fin de polymérisation avant neutralisation de thiol, tel que 12-mercaptododecylphosphonate de diéthyle par exemple, ne permet pas l'obtention d'un rendement de greffage amélioré par rapport à un procédé post-polymérisation.

Le problème technique qui se pose est donc de fournir un procédé de synthèse de (co)polymères fonctionnels le long de la chaîne permettant l'obtention d'un rendement de greffage radicalaire élevé, voire quantitatif, qui soit adaptable à une grande variété de thiols fonctionnels, en permettant notamment de surmonter les inconvénients cités plus haut.

La présente invention se propose de résoudre ce problème technique. En effet, les Inventeurs ont mis au point un procédé de synthèse permettant le greffage radicalaire de divers thiols sur des élastomères pouvant atteindre des rendements élevés, voire quantitatifs. Ceci permet de s'affranchir des inconvénients rencontrés avec les modes de synthèse envisagés précédemment. En outre, les Inventeurs ont découvert que l'utilisation d'un solvant de réaction apolaire en coupage avec un solvant polaire permet l'obtention de rendement de greffage amélioré en comparaison avec les procédés mentionnés plus haut, voir quantitatif.

Dans la présente description, on définit par taux ou pourcentage molaire d'une unité dans un polymère, le nombre de moles de cette unité dans le polymère par rapport au nombre de moles de l'ensemble des unités présentes dans ledit polymère. Par ailleurs, on définit par taux ou pourcentage massique d'une unité dans un polymère, la masse totale de ces unités dans le polymère par rapport à la masse totale du polymère.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

On définit par rendement de greffage, la quantité de dérivé thiol greffé par rapport à la quantité de thiol introduit.

L'invention a pour objet un le procédé de greffage radicalaire d'un greffon sur un élastomère diénique, comprenant les étapes suivantes:
a. solubiliser sous agitation au moins un élastomère diénique et au moins un dérivé thiol à titre de greffon dans un solvant constitué d'un mélange d'au moins un solvant polaire et d'au moins un solvant apolaire,
b. chauffer le mélange réactionnel homogène obtenu à l'étape précédente à la température de la réaction de greffage, et
c. une fois la température de la réaction de greffage atteinte, ajouter l'amorceur radicalaire pour entrainer le greffage du greffon sur les motifs de l'élastomère comportant des insaturations.

Le procédé de greffage radicalaire selon l'invention peut être effectué en continu ou en discontinu. L'homme du métier comprendra qu'en fonction de sa mise en oeuvre, les étapes du procédé, notamment les étapes a), b) et c), se déroulent alors de manière simultanée ou successive.

Le procédé de greffage radicalaire selon l'invention comprend une première étape de solubilisation sous agitation, de préférence mécanique, d'au moins un élastomère diénique et au moins un dérivé thiol à titre de greffon dans un solvant constitué d'un mélange d'au moins un solvant polaire et d'au moins un solvant apolaire

Le procédé selon l'invention met en oeuvre au moins un dérivé thiol à titre de greffon. Ce dérivé thiol peut être fonctionnel ou non. Par fonctionnel on entend la possibilité pour le dérivé thiol de comporter un groupe fonctionnel comprenant généralement un hétéroatome tel que par exemple oxygène, azote, soufre, phosphore, silicium.

Selon une variante de l'invention le dérivé thiol est choisi parmi les parmi les composés de formule (1) suivante :

HS-R₁-X Formule 1

dans laquelle
R¹ désigne un groupe alkyle en C1-C36, cycloalkyle en C5-C15, aryle en C6-C15, ou arylalkyle en C7-C15, ces groupements pouvant être halogénés ou pas,
X désigne un groupement alkyle en C1-C50, cycloalkyle en C5-C50, aryle en C6-C50, ou arylalkyle en C7-C50, un groupement hydrocarboné comprenant au moins un hétéroatome choisi parmi O, N, P, S et Si, ou un atome d'halogène, ou encore une chaîne polymérique monovalente.

Lorsque X désigne un groupement alkyle, il est de préférence un radical méthyle.

Lorsque X désigne un groupement aryle ou arylalkyle, il est de préférence un radical benzyle, phényle, tolyle ou xylyle,
Lorsque X désigne un groupement hydrocarboné comprenant au moins un hétéroatome, il est de préférence un groupement possédant une fonction hydroxyle, cétone, acide carboxylique, ester d'acide carboxylique, éther, amine primaire, secondaire ou tertiaire, amide, nitrile, silane, alkylsilane, alkoxysilane
Lorsque X désigne un atome d'halogène, il est de préférence un atome de fluor, chlore, brome ou iode.

Parmi ces dérivés thiols, utilisés à titre de greffons dans le cadre de l'invention, on peut citer des thiols tels que le 2-mercaptoethanol, le dodecane thiol, le 4-cyanobutanethiol, la cystéamine, l'acide mercapto-1-décanoïque, l'acide 4-mercaptobutyrique, éthyle thioglycolate, 3-chloro-1-propanethiol, le méthyle 3-mercaptopropionate, le benzyl mercaptan, 3-(diméthyle amino)-1-propanethiol, 3-methoxy-1-propanethiol, 2-(2-oxiranylmethoxy)-éthanethiol, etc...

Lorsque X désigne une chaîne polymérique monovalente, il désigne selon une variante un polymère obtenu à partir de monomères oléfiniques. On peut citer comme monomère oléfiniques, à titre d'exemples non-exclusifs, les monomères mono-oléfines tels que l'éthylène, le propylène, le 1-butène, l'isobutylène, le pentène, le méthylpentène, le 1-héxène, etc..., les monomères diéniques conjugués tels que décrits plus bas, les monomères diéniques fluorés, les monomères vinyliques tels que les vinyles aromatiques (dérivés du styrène tels que définis plus haut ainsi que les vinyle pyridines, les vinyle N-C1-C6-alkylepyrroles, les vinyle oxazoles, les vinyle thiazoles, les vinyle pyrimidines, les vinyle imidazoles, etc...), les (méth)acrylates d'esters d'alcool en C1-C20 (acide acrylique, acrylamide, acrylate de méthyle, acrylate d'éthyle, acrylate de butyle, acrylate d'hexyle, acrylate de 2-éthylhexyle, acide méthacrylique, méthacrylamide, méthacrylate de méthyle, méthacrylate d'éthyle, méthacrylate de butyle, méthacrylate d'hexyle, méthacrylate de 2-éthylhexyle), les (méth)acrylonitrile, les cyanoacrylates d'esters d'alcool en C1-C6, les vinyle cétones (vinyle méthyle cétone, ...), les vinyle phényle cétone, l'acétate de vinyle, les vinyle acétals, les éthers vinyliques (vinyle méthyle éther, vinyle éthyle éther, vinyle isobutyle éther, etc...), les alcools vinyliques, les vinyle halogénés (chlorure de vinyle, chlorure de vinylidène, tétrafluoroéthylène, fluorure de vinyle, fluorure de vinylidène, éthylène tétrafluoroéthylène, perfluoroalkoxy, etc...), les monomères comprenant du silicium tels que les silanes, les siloxanes (diméthylsiloxane, méthylhydroxysiloxane, diphénylsiloxane, etc...), les carbosilanes, etc..., les oxiranes tels que l'oxyde d'éthylène, l'oxyde de propylène, etc..., les esters cycliques tels que les lactones, les lactides, etc... les monomères comprenant du phosphore (polyphosphazène), les monomères comprenant du soufre (thiazyle, nitrure de soufre, etc...), les monomères comprenant du bore (borazylènes). La polymérisation de tels monomères est connue en soi. L'homme du métier saura adapter la technique de polymérisation en fonction du type de monomère à polymériser.

Lorsque X désigne une chaîne polymérique monovalente, il désigne selon d'autres variantes un polymère obtenu par polycondensation tels que les polyesters, polycarbonates, polyanhydrides, polyamines, polyimines, polyamides, polyimides, polyuréthanes, polyurées, polysulfones, polyéthers sulfones, polyarylènealkylène, etc...

Une mise en oeuvre du procédé de l'invention consiste à utiliser un mélange de dérivés de thiol tels que définis ci-dessus à titre de greffons de l'élastomère diénique.

Le procédé selon l'invention met en oeuvre au moins un élastomère diénique. Par élastomère diénique, doit être compris selon l'invention, un élastomère présentant, entre autres insaturations, des insaturations d'origine vinylique, issu au moins en partie (i.e., un homopolymère ou un copolymère) de monomères diènes (monomères porteurs de deux doubles liaisons carbone-carbone, conjuguées ou non). On appelle insaturations d'origine vinylique, des insaturations pendantes de la chaîne élastomérique provenant d'une insertion de type vinylique du monomère diénique dans l'élastomère.

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en masse). C'est à cette catégorie d'élastomères "essentiellement insaturé" que s'adresse le procédé selon l'invention. Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans l'invention:
(a) tout homopolymère obtenu par polymérisation d'un monomère diène conjugué ayant de 4 à 12 atomes de carbone, comme par exemple le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène;
(b) tout copolymère obtenu par copolymérisation d'un ou plusieurs des diènes conjugués cités plus haut, entre eux ou avec un ou plusieurs monomères éthyléniquement insaturés.
   A titre de monomères éthyléniquement insaturés on peut citer:
   - les composés vinylaromatique ayant de 8 à 20 atomes de carbone, comme par exemple le styrène, l'ortho-, méta-, para-méthylstyrène, le mélange commercial vinylmésitylène, le divinylbenzène, le vinylnaphtalène;
   - les monomères nitriles vinyliques ayant 3 à 12 atomes de carbone, comme par exemple l'acrylonitrile, le méthacrylonitrile;
   - les monomères esters acryliques dérivés de l'acide acrylique ou de l'acide méthacrylique avec des alcools ayant 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'ethyl-2 hexyle, le méthacrylate de méthyle, le méthacrylate d'éthyle, le méthacrylate de n-butyle, le méthacrylate d'isobutyle;

   Les copolymères peuvent contenir entre 99% et 20% en poids d'unités diéniques et entre 1% et 80% en poids d'unités vinylaromatiques, nitriles vinyliques et/ou esters acryliques.
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène; de tels polymères sont décrits en particulier dans les documents WO 2004/035639A1 et US 2005/0239639A1;
(d) un copolymère d'isobutène et d'isoprène (caoutchouc butyle), ainsi que les versions halogénées, en particulier chlorées ou bromées, de ce type de copolymère;
(e) le caoutchouc naturel;
(f) un mélange de plusieurs des élastomères définis en (a) à (e) entre eux.

Les polymères utilisables selon l'invention peuvent être obtenus selon des techniques classiques de polymérisation bien connues de l'homme du métier. Les élastomères peuvent avoir toute microstructure qui est fonction des conditions de polymérisation utilisées, notamment de la présence ou non d'un agent modifiant et/ou randomisant et des quantités d'agent modifiant randomisant employées. Les élastomères peuvent être par exemple à blocs, statistiques, séquencés, microséquencés, et être préparés en dispersion, en émulsion ou en solution ; ils peuvent être couplés et/ou étoilés ou encore fonctionnalisés avec un agent de couplage et/ou d'étoilage ou de fonctionnalisation.

Parmi les élastomères utilisés dans le cadre du procédé de greffage selon l'invention, on peut citer comme exemples non exclusifs, le polybutadiène, le polyisoprène, le poly chloroprène et leurs versions hydrogénées, le polyisobutylène, les copolymères à blocs du butadiène et de l'isoprène avec le styrène, ainsi que leurs versions hydrogénées comme le poly styrène-b-butadiène (SB), le poly styrène-b-butadiène-b-styrène (SBS), le poly styrène-b-isoprène-b-styrène (SIS), les poly styrène-b- (isoprène-stat-butadiène) -b-styrène ou poly styrène-b-isoprène-b-butadiène-b-styrène (SIBS), le SBS hydrogène (SEBS), le poly styrène-b-butadiène-b- méthyl méthacrylate (SBM), ainsi que sa version hydrogénée (SEBM), les copolymères statistiques du butadiène avec le styrène (SBR) et 1'acrylonitrile (NBR) et leurs versions hydrogénées, les copolymères statistiques de l'isoprène avec le styrène (SIR) et leurs versions hydrogénées, les copolymères statistiques de l'isoprène et du butadiène avec le styrène (SBIR) et leurs versions hydrogénées, les caoutchoucs butyle ou halogénés, les copolymères d'éthylène-propylène-diène (EPDM), ainsi que leurs mélanges.

Le ou les élastomères diéniques utilisés dans l'invention sont avantageusement choisis parmi les élastomères présentant un taux massique de motifs vinyliques (par exemple motifs de type -1,2), dans la partie diénique, supérieur à 20%, préférentiellement d'au moins 40% et plus préférentiellement encore d'au moins 50%.

Parmi ceux-ci, le ou les élastomères diéniques utilisés dans l'invention sont tout particulièrement choisis dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Le rapport molaire des quantités de greffons aux motifs vinyliques issus du ou des diène(s) conjugué(s) est au moins de 0,1%, de préférence 0,2% et encore plus préférentiellement de 0,3%, et il est au plus de 80%, de préférence 60% et encore plus préférentiellement 40%.

Le procédé selon l'invention met en oeuvre la solubilisation d'au moins un élastomère et d'au moins un greffon dans un solvant constitué d'un mélange comprenant au moins un solvant polaire et au moins un solvant apolaire.

Cette mise en solution peut se faire selon toute mise en oeuvre à la disposition de l'homme du métier. Selon une mise en oeuvre, l'élastomère est mis en solution dans le solvant apolaire et est mélangé sous agitation au greffon mis en solution dans le solvant polaire. Ou inversement, le greffon en solution dans le solvant polaire est mélangé à l'élastomère en solution dans le solvant apolaire sous agitation.

Le solvant selon l'invention est constitué d'un mélange comprenant au moins un solvant polaire et au moins un solvant apolaire. De préférence, le solvant polaire et le solvant apolaire sont miscibles.

A titre de solvant polaire, on peut utiliser tout solvant polaire tel qu'un composé azoté de type amine ou hétérocycle azoté, une cétone, un sulfoxyde, un éther, solvant halogéné de type chloroforme, dichlorométhane, dichloroéthane, tétrachloroéthane, etc., ainsi que leurs mélanges. De préférence, on utilise du dichlorométhane ou du THF.

A titre de solvant apolaire, on peut utiliser selon le procédé conforme à l'invention tout solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène, ainsi que leurs mélanges. A titre préférentielle, on utilise le méthylcyclohexane ou le toluène.

Le procédé selon l'invention comprend l'étape de chauffage du mélange réactionnel homogène obtenu à l'étape précédente à la température de la réaction de greffage. La température de réaction de greffage est au moins 20°C et au plus 120°C, de préférence elle varie de 50°C à 100°C et encore plus préférentiellement de 60°C à 90°C.

Le procédé selon l'invention comprend, une fois la température de la réaction de greffage atteinte, l'étape d'adjonction d'un amorceur radicalaire pour entrainer le greffage du greffon sur les motifs de l'élastomère comportant des insaturations. A titre d'amorceur radicalaire, on peut utiliser selon l'invention, tout amorceur connu de l'homme du métier. On peut citer, par exemple, l'azobisisobutyronitrile ou encore les peroxydes, sachant que, la nature du peroxyde n'ayant aucun impact sur le rendement de greffage, tous les peroxydes sont envisageables. L'amorceur radicalaire pourra être ajouté au mélange réactionnel sous toute forme usuelle, toutefois, de préférence, sous forme d'une solution dans un solvant. De préférence, le solvant de l'amorceur radicalaire est identique à l'un au moins des solvants polaire et apolaire utilisés pour solubiliser respectivement le greffon et l'élastomère diénique. A titre d'un tel solvant, on peut ainsi citer le méthylcyclohexane, le tetrahydrofurane, le dichlorométhane, etc.

De préférence, le rapport molaire de greffon à l'amorceur radicalaire est au moins 12, préférentiellement 24, et au plus 96, préférentiellement 48.

Le solvant du milieu réactionnel selon l'invention, à savoir le mélange des solvants polaires et apolaires y compris le solvant de l'amorceur radicalaire, comprend avantageusement au plus 60% en volume de solvant polaire par rapport au volume de solvant apolaire. En-dessous de cette valeur, le rendement de greffage permet de réduire significativement les inconvénients liés à la présence de thiols n'ayant pas réagis. Par exemple, la quantité de solvant polaire peut être comprise entre 0 et 60% en volume par rapport au volume total de solvant apolaire. En outre, la quantité de solvant polaire par rapport au mélange de solvants est de préférence d'au plus 40% en volume par rapport au volume total de solvant apolaire, valeur en-dessous de laquelle on peut atteindre un rendement quantitatif. Selon un autre aspect préférentiel de l'invention combinable avec les aspects précédents, le solvant comprend au moins 4% en volume de solvant polaire par rapport au volume total de solvant apolaire. Par exemple, la quantité de solvant polaire peut varier de 4 à 60% en volume par rapport au volume total de solvant apolaire, de préférence de 4 à 40% en volume.

De préférence, la quantité de solvant total, ou de solvant du milieu réactionnel, est telle que la concentration massique en élastomère est comprise entre 1 et 40% en masse, de préférence entre 2 et 20% et encore plus préférentiellement entre 2 et 10% dans ledit solvant.

Il convient de noter que dans le cadre de l'invention les variantes et les aspects préférentiels décrits plus haut sont combinables entre eux.

Contrairement à ce qui a été décrit dans l'art antérieur, la réaction entre l'élastomère et le greffon décrits ci-dessus s'opère en présence d'un mélange de solvants et d'un amorceur radicalaire, pour former un polymère greffé.

Selon l'invention, le procédé de greffage radicalaire ainsi défini permet d'atteindre des rendements de greffage significativement élevés, variant de 30% à 100%, voire, selon des mises en oeuvre particulières, des rendements variant de 70% à 100%, voire même de 80% à 100%. Il convient de noter que, de manière inattendue, le procédé selon l'invention permet de réaliser des greffages radicalaires quantitatifs d'élastomères diéniques, à savoir avec un rendement de greffage de 100%.

A l'issue du greffage de l'étape c), la réaction est stoppée de manière classique connue de l'homme du métier, par exemple par ajout à l'élastomère greffé obtenu d'un agent anti-oxydant, tel que le 4,4'-méthylène-bis-2,6-tert-butylphénol. Cet agent anti-oxydant pourra être ajouté sous forme d'une solution dans un solvant organique, tel que le toluène ou le méthylcyclohexane, qui est ensuite évaporé.

Le procédé de greffage radicalaire selon l'invention permet de préparer des élastomères greffés qui présentent un indice de polydispersité moins élevé que des élastomères greffés dans un solvant apolaire. La distribution des masses moléculaires est moins étendue car il y a moins de coupure de chaînes et/ou ramifications de chaînes avec un rendement de greffage amélioré par rapport aux polymères greffés obtenus selon les procédés décrits dans l'art antérieur qui mettent notamment en oeuvre un système à base d'un seul solvant apolaire tel que l'hexane, le cyclohexane, etc.

Les élastomères greffés selon le procédé de l'invention, peuvent être utilisés en tant que tel ou en mélanges avec un ou plusieurs autres composés. La présence de groupements greffés le long de la chaîne permet d'envisager une utilisation dans des applications similaires des polymères diéniques modifiés. Par exemple, il est connu pour l'optimisation des interactions entre l'élastomère et la charge renforçante au sein d'une composition de caoutchouc renforcée, de modifier la nature des polymères diéniques afin d'y introduire des groupes fonctionnels. Ainsi, la structure particulière de l'élastomère greffé selon l'invention permet d'envisager son utilisation dans la fabrication de divers produits à base de caoutchouc renforcé en fonction de la nature du dérivé de thiol greffé.

Les caractéristiques précitées de la présente invention, ainsi que d'autres, seront mieux comprises à la lecture de la description suivante de plusieurs exemples de réalisation de l'invention, donnés à titre illustratif et non limitatif.

### EXEMPLE DE REALISATION DE L'INVENTION.

### Mesures utilisés

Les élastomères sont caractérisés, avant cuisson, comme indiqué ci-après.

### Chromatographie d'exclusion stérique

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE.

Préparation du polymère: Il n'y a pas de traitement particulier de l'échantillon de polymère avant analyse. Celui-ci est simplement solubilisé, dans du (tétrahydrofurane + 1%vol. d'eau distillée), à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofurane. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### Température de transition vitreuse

Les températures de transition vitreuse Tg des polymères sont mesurées au moyen d'un calorimètre différentiel (" differential scanning calorimeter "). L'analyse est réalisée selon les requis de la norme ASTM D3418-08.

### Spectroscopie de résonance magnétique nucléaire

Les déterminations des taux des différentes unités monomères et de leurs microstructures au sein du copolymère sont réalisées par une analyse RMN. Les spectres sont acquis sur un spectromètre 500 MHz BRUKER équipé d'une sonde "large bande" BBIz-grad 5 mm. L'expérience RMN 1H quantitative, utilise une séquence simple impulsion 30° et un délai de répétition de 3 secondes entre chaque acquisition. Les échantillons sont solubilisés dans le sulfure de carbone (CS2). 100 µL de cyclohexane deutéré (C6D12) sont ajoutés pour le signal de lock.

Le spectre RMN ¹H permet de quantifier les motifs greffés par intégration des signaux caractéristiques suivants :

| Thiol greffé | Protons intégrés | Déplacement chimique (δ) (ppm) |
|---|---|---|
| 4-cyanobutanethiol | 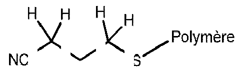 | 2,5 (NC-C**H**₂-) |
| | | 2,6 (-S-C**H**₂-) |
| dodécanethiol | 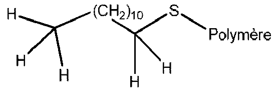 | 0,75 (-CH₂-C**H**₃) |
| | | 2,25 (-S-C**H**₂-) |
| 2-mercaptoethanol | 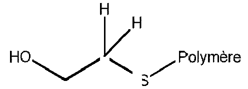 | 3,9 (-S-C**H**₂-) |

### Exemples de réalisation de l'invention

### Elastomère de départ utilisé :

Homopolymère de butadiène préparé en solution présentant les caractéristiques de microstructure suivantes par RMN ¹H :
taux massique de motifs 1,2- (vinyliques) : 75%
Ce polybutadiène présente une masse moléculaire Mn = 118 300 g/mol et un Ip = 1,07 et une Tg de -31°C (avec ΔT=7).

### Traitement appliqué à cet élastomère de départ :

Le polymère de départ est soumis à un traitement antioxydant par addition de 0,4 parties pour cent parties d'élastomères (pce) de 4,4'-méthylène-bis-2,6-tert-butylphénol et de 0,4 parties pour cent parties d'élastomères (pce) de N-(1,3-diméthylbutyl)-N'-phényl-p-phénylènediamine.

### Synthèse d'un polymère greffé dans le méthylcyclohexane (témoin) :

5g de polybutadiène sont mis en solution dans 125mL de méthylcyclohexane dans un réacteur de 250 mL équipé d'un réfrigérant et d'une agitation mécanique. Une solution de 1,48g de dodécanethiol dans 30mL de methylcylohexane est ajoutée à la solution de polymère et le milieu réactionnel est chauffé à 80 °C. A la suite est injectée une solution de 61,7mg de peroxyde de lauroyle dans 30mL de méthylcyclohexane à l'aide d'une seringue.

Après 4heures à 80 °C, 1mL d'une solution de 4,4'-méthylène-bis-2,6-tert-butylphénol dans le méthylcyclohexane à 100g/L (soit 0,1g) sont ajoutés et le milieu réactionnel est laissé sous agitation à 80 °C pendant 15 minutes. Une fois revenu à température ambiante, le milieu réactionnel est ensuite coagulé dans 400mL de méthanol puis rincé avec 200mL de méthanol. Le polybutadiène fonctionnalisé est séché par étuvage sous vide (200 torr) à 60 °C pendant 1 jour.

Le taux de fonction greffé déterminé par spectroscopie RMN ¹H est de 0,43%mol. Le rendement de greffage est de 6%.

### Synthèse d'un polymère greffé dans un coupage de solvant méthylcyclohexane/dichlorométhane (selon l'invention) :

5g de polybutadiène sont mis en solution dans 125mL de méthylcyclohexane dans un réacteur de 250 mL équipé d'un réfrigérant et d'une agitation mécanique. Une solution de 1,44 g de dodécanethiol dans 30mL de dichlorométhane est ajoutée à la solution de polymère et le milieu réactionnel est chauffé à 80 °C. A la suite est injectée une solution de 61,2mg de peroxyde de lauroyle dans 30mL de méthylcyclohexane à l'aide d'une seringue.

Après 4 heures à 80 °C, 1mL d'une solution de 4,4'-méthylène-bis-2,6-tert-butylphénol dans le méthylcyclohexane à 100g/L (soit 0,1g) sont ajoutés et le milieu réactionnel est laissé sous agitation à 80 °C pendant 15 minutes. Une fois revenu à température ambiante, le milieu réactionnel est ensuite coagulé dans 400mL de méthanol puis rincé avec 200mL de méthanol. Le polybutadiène fonctionnalisé est séché par étuvage sous vide (200torr) à 60 °C pendant 1 jour.

La fraction volumique de solvant polaire est de 20% par rapport au volume de solvant apolaire.

Le taux de fonction greffé déterminé par spectroscopie RMN ¹H est de 7,5%mol. Le rendement de greffage est de 100%.

Les résultats de tests de greffage radicalaire de différents thiols sur les élastomères diéniques sont regroupés dans le tableau I ci-dessous.

Il est rappelé que le rendement de greffage est la quantité de dérivé thiol greffé par rapport à la quantité de thiol introduit.

**Tableau I**

| Essais | Dérivé de thiol | Solvant | Amorceur | Temps de réaction (heures) | Mₙ (kg/mol) | % molaire de fonction greffée | Ip (Mw/Mn) | Rendement de greffage (%) |
|---|---|---|---|---|---|---|---|---|
| 1 | Dodécanethiol | MCH/CH₂Cl₂ | Peroxyde de lauroyle | 4 | 113 | 7,5 | 1,26 | 100 |
| 2 | Dodécanethiol | THF | AIBN | 4 | 88 | 3,7 | 1,07 | 46 |
| 3 | Dodécanethiol | MCH | Peroxyde de lauroyle | 4 | 108 | 0,4 | 1,66 | 5 |
| 4 | 2-mercaptoéthanol | MCH/CH₂Cl₂ | Peroxyde de lauroyle | 4 | 129 | 8,3 | 1,25 | 100 |
| 5 | 2-mercaptoéthanol | THF | AIBN | 4 | 115 | 3,4 | 1,13 | 44 |
| 6 | 2-mercaptoéthanol | MCH | Peroxyde de lauroyle | 4 | 144 | 0,3 | 1,75 | 4 |
| 7 | 4-cyanobutanethiol | MCH/CH₂Cl₂ | Peroxyde de lauroyle | 4 | 116 | 7,9 | 1,5 | 100 |
| 8 | 4-cyanobutanethiol | THF | AIBN | 4 | 110 | 3,5 | 1,2 | 45 |
| 9 | 4-cyanobutanethiol | MCH | Peroxyde de lauroyle | 4 | 140 | 0,2 | 1,83 | 2,5 |

On constate que le rendement de greffage est plus élevé lorsqu'on utilise le procédé selon l'invention qui met en oeuvre un mélange de solvants comprenant un solvant apolaire et un solvant polaire, plutôt que le procédé mis en oeuvre en solvant purement apolaire (méthylcyclohexane, par exemple) ou en solvant purement polaire (THF, par exemple) de l'art antérieur.

On constate aussi que les indices de polydispersité des polymères greffés évoluent beaucoup plus lorsque les polymères greffés sont synthétisés dans un solvant purement apolaire comme c'est le cas dans l'art antérieur. Les indices de polydispersité des polymères greffés synthétisés d'après le procédé selon l'invention dans un mélange d'un solvant apolaire et d'un solvant polaire et en présence d'un amorceur radicalaire sont inférieurs à ceux des polymères greffés synthétisés dans un solvant purement apolaire (méthylcyclohexane, par exemple).

Le procédé selon l'invention a donc l'avantage de donner des rendements plus élevés. De plus, il fournit des polymères greffés de polydispersité plus faible que ceux obtenus pour les polymères greffés synthétisés en solvant apolaire.

## Revendications

1. Procédé de greffage radicalaire d'un greffon sur un élastomère diénique, comprenant les étapes suivantes:
a. solubiliser sous agitation au moins un élastomère diénique et au moins un dérivé de thiol à titre de greffon dans un solvant comprenant un mélange d'au moins un solvant polaire et d'au moins un solvant apolaire,
b. chauffer le mélange réactionnel homogène obtenu à l'étape précédente à la température de la réaction de greffage, et
c. une fois la température de la réaction de greffage atteinte, ajouter l'amorceur radicalaire pour entrainer le greffage du greffon sur les motifs de l'élastomère comportant des insaturations.

2. Procédé de greffage radicalaire d'un greffon sur un élastomère diénique selon la revendication 1, **caractérisé en ce que** le solvant du milieu réactionnel à l'étape c) comprend au plus 60 % en volume d'un solvant polaire par rapport au volume de solvant apolaire, de préférence au plus 40% en volume.

3. Procédé de greffage radicalaire d'un greffon sur un élastomère diénique selon la revendication 1 ou 2, **caractérisé en ce que** le solvant comprend au moins 4 % en volume d'un solvant polaire par rapport au volume de solvant apolaire.

4. Procédé de greffage radicalaire d'un greffon sur un élastomère diénique selon l'une quelconque des revendications précédentes, **caractérisé en ce que** le solvant polaire est choisi parmi les solvants azotés, les cétones, les sulfoxydes, les éthers et les solvants halogénés, ou un mélange de ces solvants.

5. Procédé de greffage radicalaire d'un greffon sur un élastomère diénique selon la revendication 4, **caractérisé en ce que** le solvant polaire est le dichlorométhane ou le tétrahydrofurane.

6. Procédé de greffage radicalaire d'un greffon sur un élastomère diénique selon l'une quelconque des revendications précédentes, **caractérisé en ce que** le dérivé thiol est choisi parmi les parmi les composés de formule (1) suivante :
HS-R¹-X Formule 1
dans laquelle
R¹ désigne un groupement alkyle en C1-C36, cycloalkyle en C5-C15, aryle en C6-C15, ou arylalkyle en C7-C15, ces groupements pouvant être halogénés ou non,
X désigne un groupement alkyle en C1-C50, cycloalkyle en C5-C50, aryle en C6-C50, ou arylalkyle en C7-C50, un atome d'halogène, un groupement hydrocarboné comprenant au moins un hétéroatome choisi parmi O, N, P, S et Si, ou encore une chaîne polymérique monovalente.

7. Procédé de greffage radicalaire d'un greffon sur un élastomère diénique selon la revendication 6, **caractérisé en ce que** le dérivé thiol est choisi parmi le 2-mercaptoethanol, le dodecane thiol, le 4-cyanobutanethiol, la cystéamine, l'acide mercapto-1-décanoïque, l'acide 4-mercaptobutyrique, éthyle thioglycolate, 3-chloro-1-propanethiol, le méthyle 3-mercaptopropionate, le benzyl mercaptan, 3-(diméthyle amino)-1-propanethiol, 3-methoxy-1-propanethiol, 2-(2-oxiranylmethoxy)-éthanethiol.

8. Procédé de greffage radicalaire d'un greffon sur un élastomère diénique selon l'une quelconque des revendications précédentes, **caractérisé en ce que** le rapport molaire du dérivé de thiol à l'amorceur radicalaire est au moins 12, préférentiellement 24, et au plus 96, préférentiellement 48.

9. Procédé de greffage radicalaire d'un greffon sur un élastomère diénique selon l'une quelconque des revendications précédentes, **caractérisé en ce que** l'élastomère diénique est choisi parmi les élastomères présentant un taux massique de motifs vinyliques dans la partie diénique, supérieur à 20%, préférentiellement d'au moins 40% et plus préférentiellement encore d'au moins 50%.

10. Procédé de greffage radicalaire d'un greffon sur un élastomère diénique selon l'une quelconque des revendications précédentes, **caractérisé en ce que** l'élastomère diénique est un polybutadiène (BR), un polyisoprène (IR) de synthèse, un caoutchouc naturel (NR), un copolymère de butadiène et/ou d'isoprène, notamment un copolymère de butadiène-styrène (SBR), un copolymère d'isoprène-butadiène (BIR), un copolymère d'isoprène-styrène (SIR) et un copolymère d'isoprène-butadiène-styrène (SBIR).

11. Procédé de greffage radicalaire d'un greffon sur un élastomère diénique selon l'une quelconque des revendications précédentes, **caractérisé en ce que** le rapport molaire des quantités de greffons aux motifs vinyliques issus du ou des diène(s) conjugué(s) de l'élastomère diénique est au moins de 0,1%, de préférence 0,2% et encore plus préférentiellement de 0,3%, et il est au plus de 80%, de préférence 60% et encore plus préférentiellement 40%.

## Patentansprüche

1. Verfahren zur radikalischen Pfropfung eines aufgepfropften Moleküls an ein Dien-Elastomer, das die folgenden Schritte umfasst:
a. In-Lösung-Bringen mindestens eines Dien-Elastomers und mindestens eines Thiolderivats als aufgepfropftes Molekül unter Rühren in einem Lösungsmittel, das ein Gemisch von mindestens mindestens einem polaren Lösungsmittel und mindestens einem unpolaren Lösungsmittel umfasst,
b. Erhitzen des im vorhergehenden Schritt erhaltenen homogenen Reaktionsgemischs auf die Temperatur der Pfropfungsreaktion und,
c. nachdem die Temperatur der Pfropfungsreaktion erreicht ist, Zugeben des Radikalstarters, damit die Pfropfung des aufgepfropften Moleküls an die Motive des Elastomers, die Ungesättigtheiten tragen, erhalten wird.

2. Verfahren zur radikalischen Pfropfung eines aufgepfropften Moleküls an ein Dien-Elastomer nach Anspruch 1, **dadurch gekennzeichnet, dass** das Lösungsmittel des Reaktionsmediums in Schritt c) höchstens 60 Vol.-% eines polaren Lösungsmittels, bezogen auf das Volumen des unpolaren Lösungsmittels, vorzugsweise höchstens 40 Vol.-%, umfasst.

3. Verfahren zur radikalischen Pfropfung eines aufgepfropften Moleküls an ein Dien-Elastomer nach Anspruch 1 oder 2, **dadurch gekennzeichnet, dass** das Lösungsmittel mindestens 4 Vol.-% eines polaren Lösungsmittels, bezogen auf das Volumen des unpolaren Lösungsmittels, umfasst.

4. Verfahren zur radikalischen Pfropfung eines aufgepfropften Moleküls an ein Dien-Elastomer nach einem der vorhergehenden Ansprüche, **dadurch gekennzeichnet, dass** das polare Lösungsmittel aus stickstoffhaltigen Lösungsmitteln, Ketonen, Sulfoxiden, Ethern, halogenierten Lösungsmitteln oder einem Gemisch dieser Lösungsmittel ausgewählt ist.

5. Verfahren zur radikalischen Pfropfung eines aufgepfropften Moleküls an ein Dien-Elastomer nach Anspruch 4, **dadurch gekennzeichnet, dass** das polare Lösungsmittel Dichlormethan oder Tetrahydrofuran ist.

6. Verfahren zur radikalischen Pfropfung eines aufgepfropften Moleküls an ein Dien-Elastomer nach einem der vorhergehenden Ansprüche, **dadurch gekennzeichnet, dass** das Thiolderivat aus den Verbindungen der folgenden Formel (1) aus gewählt ist:
HS-R¹-X Formel (1),
worin:
R¹ für eine C1-C36-Alkyl-, C5-C15-Cycloalkyl-, C6-C15-Aryl- oder C7-C15-Arylalkylgruppe steht, wobei diese Gruppen halogeniert sein können oder nicht,
X für eine C1-C50-Alkyl-, C5-C50-Cycloalkyl-, C6-C50-Aryl- oder C7-C50-Arylalkylgruppe, ein Halogenatom, eine Kohlenwasserstoffgruppe, die mindestens ein aus O, N, P, S und Si ausgewähltes Heteroatom umfasst, oder eine einwertige Polymerkette steht.

7. Verfahren zur radikalischen Pfropfung eines aufgepfropften Moleküls an ein Dien-Elastomer nach Anspruch 6, **dadurch gekennzeichnet, dass** das Thiolderivat aus 2-Mercaptoethanol, Dodecanthiol, 4-Cyanobutanthiol, Cysteamin, Mercapto-1-decansäure, 4-Mercaptobuttersäure, Ethylthioglykolat, 3-Chlor-1-propanthiol, Methyl-3-mercaptopropionat, Benzylmercaptan, 3-(Dimethylamino)-1-propanthiol, 3-Methoxy-1-propanthiol, 2-(2-Oxiranylmethoxy)-ethanthiol ausgewählt ist.

8. Verfahren zur radikalischen Pfropfung eines aufgepfropften Moleküls an ein Dien-Elastomer nach einem der vorhergehenden Ansprüche, **dadurch gekennzeichnet, dass** das Molverhältnis des Thiolderivats zu dem Radikalstarter mindestens 12, vorzugsweise 24, und höchstens 96, vorzugsweise 48, beträgt.

9. Verfahren zur radikalischen Pfropfung eines aufgepfropften Moleküls an ein Dien-Elastomer nach einem der vorhergehenden Ansprüche, **dadurch gekennzeichnet, dass** das Dien-Elastomer aus Elastomeren ausgewählt ist, die einen Massenanteil an Vinylmotiven im Dien-Abschnitt von mehr als 20%, vorzugsweise mindestens 40% und noch stärker bevorzugt mindestens 50% aufweisen.

10. Verfahren zur radikalischen Pfropfung eines aufgepfropften Moleküls an ein Dien-Elastomer nach einem der vorhergehenden Ansprüche, **dadurch gekennzeichnet, dass** das Dien-Elastomer ein Polybutadien (BR), ein synthetisches Polyisopren (IR), ein Naturkautschuk (NR), ein Copolymer von Butadien und/oder Isopren, insbesondere ein Butadien-Styrol-Copolymer (SBR), ein Isopren-Butadien-Copolymer (BIR), ein Isopren-Styrol-Copolymer (SIR) und ein Isopren-Butadien-Styrol-Copolymer (SBIR), ist.

11. Verfahren zur radikalischen Pfropfung eines aufgepfropften Moleküls an ein Dien-Elastomer nach einem der vorhergehenden Ansprüche, **dadurch gekennzeichnet, dass** das Molverhältnis der Mengen an aufgepfropften Molekülen zu den Vinylmotiven, die von dem oder den konjugierten Dien(en) des Dien-Elastomers stammen, mindestens 0,1%, vorzugsweise 0,2% und noch stärker bevorzugt 0,3% beträgt und höchstens 80%, vorzugsweise 60% und noch stärker bevorzugt 40% beträgt.

## Claims

1. Process for the radical grafting of a graft to a diene elastomer, comprising the following stages:
a. dissolving, with stirring, at least one diene elastomer and at least one thiol derivative as graft in a solvent comprising a mixture of at least one polar solvent and of at least one nonpolar solvent,
b. heating the homogeneous reaction mixture obtained in the preceding stage to the temperature of the grafting reaction, and
c. once the temperature of the grafting reaction has been reached, adding the radical initiator in order to bring about the grafting of the graft to the units of the elastomer comprising unsaturations.

2. Process for the radical grafting of a graft to a diene elastomer according to Claim 1, **characterized in that** the solvent of the reaction medium in stage c) comprises at most 60% by volume of a polar solvent with respect to the volume of nonpolar solvent, preferably at most 40% by volume.

3. Process for the radical grafting of a graft to a diene elastomer according to Claim 1 or 2, **characterized in that** the solvent comprises at least 4% by volume of a polar solvent with respect to the volume of nonpolar solvent.

4. Process for the radical grafting of a graft to a diene elastomer according to any one of the preceding claims, **characterized in that** the polar solvent is chosen from nitrogenous solvents, ketones, sulphoxides, ethers and halogenated solvents, or a mixture of these solvents.

5. Process for the radical grafting of a graft to a diene elastomer according to Claim 4, **characterized in that** the polar solvent is dichloromethane or tetrahydrofuran.

6. Process for the radical grafting of a graft to a diene elastomer according to any one of the preceding claims, **characterized in that** the thiol derivative is chosen from the compounds of following formula (1):
HS-R¹-X Formula 1
in which:
R¹ denotes a C₁-C₃₆ alkyl, C₅-C₁₅ cycloalkyl, C₆-C₁₅ aryl or C₇-C₁₅ arylalkyl group, it being possible for these groups to be halogenated or nonhalogenated,
X denotes a C₁-C₅₀ alkyl, C₅-C₅₀ cycloalkyl, C₆-C₅₀ aryl or C₇-C₅₀ arylalkyl group, a halogen atom, a hydrocarbon group comprising at least one heteroatom chosen from O, N, P, S and Si, or also a monovalent polymer chain.

7. Process for the radical grafting of a graft to a diene elastomer according to Claim 6, **characterized in that** the thiol derivative is chosen from 2-mercaptoethanol, dodecanethiol, 4-cyanobutanethiol, cysteamine, mercapto-1-decanoic acid, 4-mercaptobutyric acid, ethyl thioglycolate, 3-chloro-1-propanethiol, methyl 3-mercaptopropionate, benzyl mercaptan, 3-dimethylamino-1-propanethiol, 3-methoxy-1-propanethiol or 2-(2-oxiranylmethoxy)ethanethiol.

8. Process for the radical grafting of a graft to a diene elastomer according to any one of the preceding claims, **characterized in that** the molar ratio of the thiol derivative to the radical initiator is at least 12, preferably 24, and at most 96, preferably 48.

9. Process for the radical grafting of a graft to a diene elastomer according to any one of the preceding claims, **characterized in that** the diene elastomer is chosen from elastomers exhibiting a content by weight of vinyl units in the diene part of greater than 20%, preferably of at least 40% and more preferably still of at least 50%.

10. Process for the radical grafting of a graft to a diene elastomer according to any one of the preceding claims, **characterized in that** the diene elastomer is a polybutadiene (BR), a synthetic polyisoprene (IR), a natural rubber (NR), a copolymer of butadiene and/or of isoprene, in particular a butadiene/styrene copolymer (SBR), an isoprene/butadiene copolymer (BIR), an isoprene/styrene copolymer (SIR) and an isoprene/butadiene/styrene copolymer (SBIR).

11. Process for the radical grafting of a graft to a diene elastomer according to any one of the preceding claims, **characterized in that** the molar ratio of the amounts of grafts to the vinyl units resulting from the conjugated diene(s) of the diene elastomer is at least 0.1%, preferably 0.2% and more preferably still 0.3%, and it is at most 80%, preferably 60% and more preferably still 40%.
